# EUROPEAN PATENT SPECIFICATION

(11) **EP 2 360 977 B1**
(45) Date of publication and mention of the grant of the patent: **21.11.2012**
(21) Application number: 10305150.4
(22) Date of filing: 15.02.2010
(51) Int. Cl.: H04W 52/02

(54) **A method for transmission between a base station and user terminals and a user terminal therefor**
Verfahren zur Übertragung zwischen einer Basisstation und Benutzerendgeräten und Benutzerendgerät dafür
Procédé de transmission entre une station de base et des terminaux utilisateur et terminal utilisateur correspondant

(43) Date of publication of application: 24.08.2011
(73) Proprietor: Alcatel Lucent, 75007 Paris (FR)
(72) Inventor: Zeller, Dietrich, 71067 Sindelfingen (DE); Braun, Volker, 70176 Stuttgart (DE)
(74) Representative: Kleinbub, Oliver

(56) References cited:
- EP-A1- 2 056 628
- WO-A1-2009/041871
- WO-A1-2009/140988
- JP-A- 2009 182 801
- US-A1- 2010 002 614
- ERICSSON ET AL: "Extended cell DTX for enhanced energy-efficient network operation" 3GPP DRAFT; R1-095011{ENERGY EFFICIENCY}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389361 [retrieved on 2009-11-05]
- HUAWEI: "Opportunities for Energy Savings in LTE Networks" 3GPP TSG RAN WG1 MEETING 59BIS; R1-100275, 18 January 2010 (2010-01-18), - 22 January 2010 (2010-01-22) pages 1-4, XP002588640 Valencia, Spain

## Description

### Field of the invention

The invention relates to a method for transmission between a base station and user terminals, and a base station and a user terminal adapted to perform said method.

### Background

In cellular communication networks using standards like e.g. Third Generation Partnership Long Term Evolution (3GPP LTE) standard, the reduction of energy consumption is a task of growing interest in view of growing costs for energy and the need to reduce the emission of CO₂.

The energy consumption of user terminals has been a topic for research and development for more than a decade which resulted in energy-efficient transmission and reception schemes for user terminals. However, regarding the overall energy consumption of a cellular communication network, the by far most important part of the energy consumption is on the base station site.

A straightforward way in order to reduce the energy consumption of a communication network, as e.g. an LTE network, is to temporarily switch off the power amplifier on the base station site.

### Summary

According to the prior art, it is proposed to avoid as much as possible the downlink transmission of so-called cell-specific reference signals (CRS) during subframes in which there is no data transmission.

In the document R1-095011, 3GPP TSG-RAN WG1 #59, Jeju, Korea, November 9-13, 2009 with the title "Extended cell DTX for enhanced energy-efficient network operation" from Ericsson et al, a method for an energy-efficient network operation is disclosed according to which cell-specific reference signals are only transmitted in subframes with downlink data transmission.

In the patent application EP 2 056 628 A1, a method for generation of a switching signal by a communication network element is disclosed, wherein the switching signal is adapted to switch an activity state of a network element, as e.g. a base station which is switched off or into a stand-by mode by the switching signal. The switching signal may e.g. be based on a communication load in a cell.

In the patent application publication WO 2009/041871 A1, a method for use in a wireless communication system is disclosed, according to which a node performs measurements on pre-defined system indicators, and based on the results of said measurements, the node decides to vary the number of available downlink subframes used for downlink traffic in said downlink radio frames and also to vary the content of the downlink subframes which are used.

In the patent application publication WO 2009/140988 A1, methods, apparatuses, a system and a computer program product for reducing a power consumption in low load scenarios are disclosed. An apparatus can comprise transmitting means, receiving means and determining means for determining whether a signal quality of a broadcast channel of a wireless network is insufficient, wherein the transmitting means may transmit on a wireless access channel an activation information to a further apparatus if the determination is affirmative. The activation information can indicate that disabled transmitting means of the further apparatus should be re-enabled.

However, as cell-specific reference signals are used to determine radio parameters like channel quality information, precoding matrix information, or rank information, as comprised e.g. in LTE in the so-called channel quality indicator, precoding matrix indicator, and rank indicator respectively, a flexible method for determination of said radio parameters is needed.

The object of the invention is thus to propose a method for transmission between a base station and user terminals with improved resource usage, i.e. with reduced energy consumption, and at the same time with a flexible determination of radio parameters, such as channel quality information, precoding matrix information, or rank information.

According to the invention, a new transmission scheme is proposed, in which two modes for transmission with different amounts of transmitted cell-specific reference signals are used, and in which a dedicated mode for determination of radio parameters like channel quality information, precoding matrix information, or rank information is applied depending on the mode for transmission.

The object is thus achieved by a method for transmission between a base station and user terminals, wherein
- in a first mode for transmission between a base station and user terminals, cell-specific reference signals are only transmitted in subframes which are used to transmit downlink control signaling or downlink data,
- in a second mode for transmission between a base station and user terminals, cell-specific reference signals are transmitted in all subframes predefined for transmission of downlink control signaling or downlink data,
- if the first mode for transmission is used, the user terminals use a first mode for determination of at least one of the group of channel quality information, precoding matrix information, and rank information which is based on the cell-specific reference signals transmitted in the first subframe within the frames,
- and if the second mode for transmission is used, the user terminals use a second mode for determination of at least one of the group of channel quality information, precoding matrix information, and rank information which is based on the cell-specific reference signals transmitted in all subframes predefined for transmission of downlink control signaling or downlink data.

The object is furthermore achieved by a base station for transmission between the base station and user terminals, wherein the base station comprises at least one processing means which is adapted to
- transmit in a first mode for transmission between a base station and user terminals cell-specific reference signals only in subframes which are used to transmit downlink control signaling or downlink data,
- transmit in a second mode for transmission between a base station and user terminals cell-specific reference signals in all subframes predefined for transmission of downlink control signaling or downlink data,
- and signal to the user terminals the use of said first mode for transmission or said second mode for transmission between a base station and user terminals.

The object is furthermore achieved by a user terminal for transmission between a base station and the user terminal, wherein the user terminal comprises at least one processing means which is adapted to
- use a first mode for determination of at least one of the group of channel quality information, precoding matrix information, and rank information which is based on cell-specific reference signals transmitted in the first subframe within the frames, if a first mode for transmission is used in which cell-specific reference signals are only transmitted in subframes which are used to transmit downlink control signaling or downlink data,
- and use a second mode for determination of at least one of the group of channel quality information, precoding matrix information, and rank information which is based on the cell-specific reference signals transmitted in all subframes predefined for transmission of downlink control signaling or downlink data, if the second mode for transmission is used in which cell-specific reference signals are transmitted in all subframes predefined for transmission of downlink control signaling or downlink data.

The invention is described in the following within the framework of 3GPP LTE, however as the invention is not restricted to 3GPP LTE, but can in principle be applied in other networks that transmit broadcast channel information in downlink, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily the usage of subframes zero to nine according to the prior art.
Fig. 4 schematically shows exemplarily the usage of subframes zero to nine according to an embodiment of the invention.

### Description of the embodiments

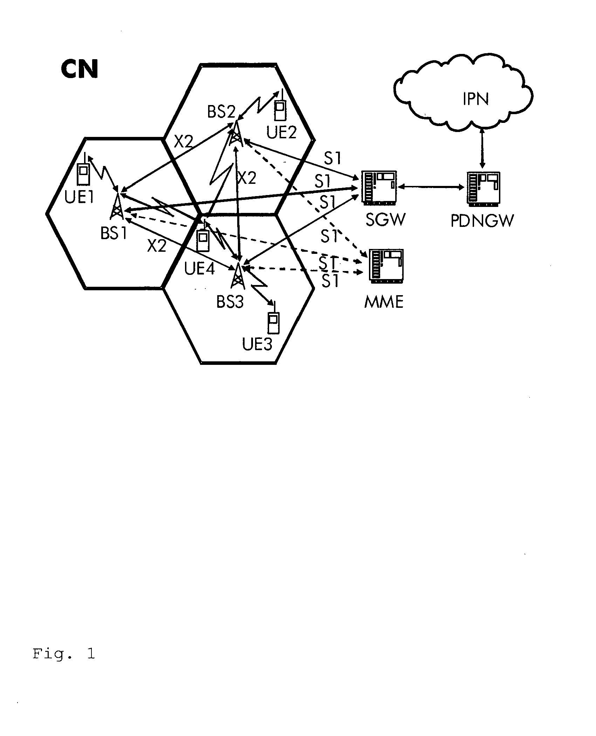

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

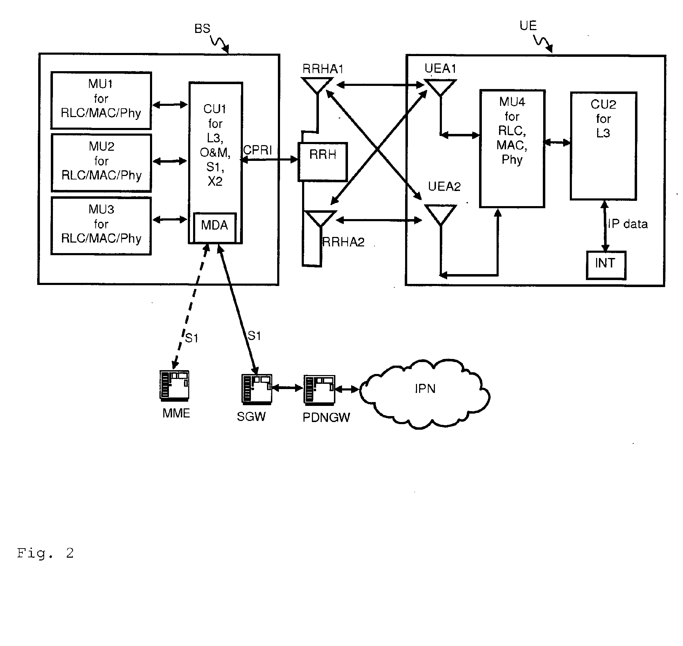

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the on the MAC layer (MAC = Media Access Control) which is responsible and Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, the usage of subframes is described under the assumption that no downlink control signaling or downlink data is transmitted.

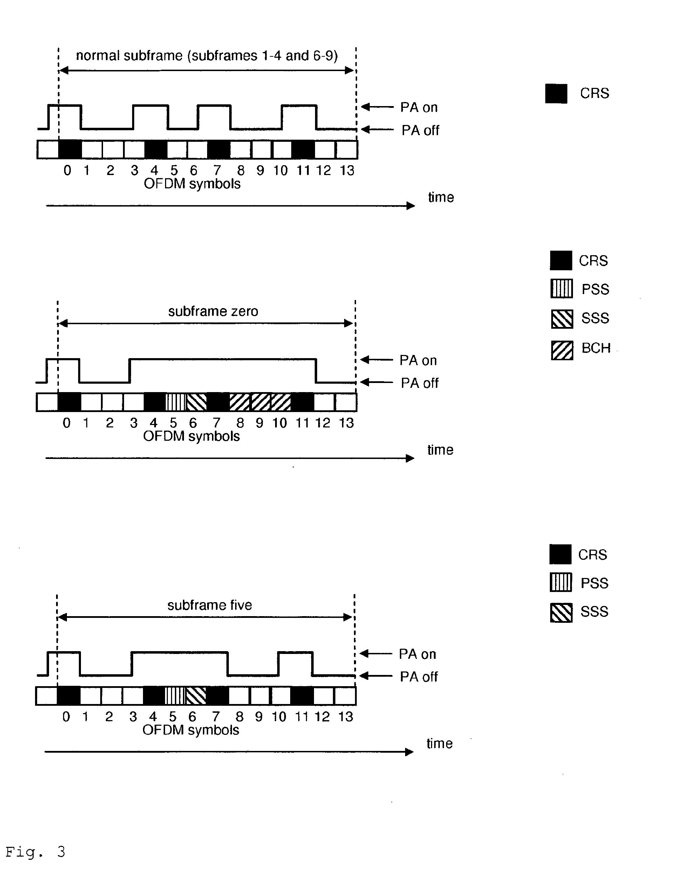

Fig. 3 schematically shows exemplarily the usage of subframes zero to nine according to the prior art.

In LTE, each frame is subdivided into 10 subframes, and each subframe in turn comprises 14 OFDM symbols (OFDM = Orthogonal Frequency Division Multiplexing).

The 14 OFDM symbols that build a normal unicast subframe, as e.g. the subframes 1-4 and 6-9 in LTE, are depicted in the upper part of fig. 3.

The cell-specific reference signals CRS are transmitted in every subframe, and can be used for channel estimation for coherent demodulation of downlink transmission, and for cell-search measurements, both for neighbour-cell measurements for handover and for measurements before initial access.

In a normal unicast subframe as depicted in the upper part of fig. 3, the OFDM symbols 0, 4, 7 and 11 are used for transmission of cell-specific reference signals CRS.

In order to quantify the energy consumption of a power amplifier used in a base station for transmission, it is useful to analyze the so-called minimum power-amplifier transmission-time fraction, which is defined as the ratio between the time the base station is required to transmit signals, as e.g. cell-specific reference signals CRS, primary and secondary synchronization signals PSS and SSS, or broadcast channel information BCH, and the total time.

In fig. 3, the power profile of the power amplifier is depicted as a solid line just above the OFDM symbols. "PA on" in fig. 3 indicates, that the power amplifier is switched on, and "PA off" in fig. 3 indicates, that the power amplifier is switched off. The power amplifier needs to ramp up the power to the desired level somewhat before the transmission but can then be switched off fairly quickly. For calculations of the minimum power-amplifier transmission-time fraction it has been assumed that half an OFDM symbol must be added to each transmission to allow for the power amplifier to reach the desired power level from the power saving state. The addition of half an OFDM symbol is an example, and the time will depend on hardware characteristics.

A normal unicast subframe according to the prior art as depicted in the upper part of fig. 3 contains cell-specific reference signals CRS in four OFDM symbols. This structure will result in four transmissions each being 1.5 OFDM symbols long, which can be seen by the upper solid line representing the power profile. Thus, the transmission structure results in a minimum power-amplifier transmission-time fraction of (6 OFDM symbols) / (14 OFDM symbols ≈ 43%.

The 14 OFDM symbols that build subframe zero in LTE are depicted in the middle part of fig. 3.

In subframe zero, the OFDM symbols 0, 4, 7 and 11 are used for transmission of cell-specific reference signals CRS.

The primary synchronization signals PSS and the secondary synchronization signals SSS are transmitted in every frame in subframe 0 and 5, in which the OFDM symbols 5 and 6 are used for the primary synchronization signals PSS and the secondary synchronization signals SSS respectively. The primary synchronization signals PSS and the secondary synchronization signals SSS are used to assist the cell search.

The broadcast channel information BCH is transmitted in the first subframe of each frame in four consecutive frames. The broadcast channel information is transmitted to all user terminals in the cell and includes relevant system parameters to enable the user terminals to establish a signalling connection with the base station or the radio access network. In the WiMAX system, equivalent information is broadcasted within the frame control header (FCH), uplink and downlink maps and the uplink and downlink channel descriptor, UCD and DCD, respectively.

In the embodiment depicted in fig. 3, the OFDM symbols 8, 9 and 10 are used for transmission of the broadcast channel information BCH in subframe zero.

The broadcast channel information BCH includes, among other parameters, signaling of the system frame number (SFN), which is required to enable sending paging messages to a user terminal.

The transmission structure for subframe zero will result in two transmissions being 1.5 and 8.5 OFDM symbols long, respectively, which can be seen by the solid line representing the power profile. Thus, the transmission structure results in a minimum power-amplifier transmission-time fraction of (10 OFDM symbols)/(14 OFDM symbols) ≈ 71%.

The 14 OFDM symbols that build subframe five in LTE are depicted in the lower part of fig. 3.

In subframe five, the OFDM symbols 0, 4, 7 and 11 are used for transmission of cell-specific reference signals CRS.

The primary synchronization signals PSS and the secondary synchronization signals SSS are transmitted in every frame in subframe 0 and 5, in which the OFDM symbols 5 and 6 are used for the primary synchronization signals PSS and the secondary synchronization signals SSS respectively.

The transmission structure for subframe five will result in three transmissions being 1.5, 4.5 and 1.5 OFDM symbols long, respectively, which can be seen by the solid line representing the power profile. Thus, the transmission structure results in a minimum power-amplifier transmission-time fraction of (7.5 OFDM symbols)/(14 OFDM symbols) ≈ 54%.

According to an embodiment of the invention, there are two modes for transmission between a base station BS and user terminals UE.

In one mode for transmission, cell-specific reference signals CRS are transmitted in all subframes predefined for transmission of downlink control signaling or downlink data, i.e. cell-specific reference signals CRS are transmitted in all predefined subframes regardless of the predefined subframes really being used for downlink control signaling or downlink data.

Such downlink control signaling comprises in LTE the physical control format indicator channel (PCFICH), the physical downlink control channel (PDCCH) and the physical hybrid-ARQ indicator channel (PHICH). Downlink data is e.g. transmitted in the broadcast channel BCH, the physical downlink shared channel (PDSCH), or the physical multicast channel (PMCH).

An example for said mode for transmission is depicted in fig. 3. It can be seen that in the unicast subframes cell-specific reference signals CRS are transmitted although no further downlink control signaling or downlink data is present.

In a further mode for transmission cell-specific reference signals are only transmitted in subframes which are really used to transmit downlink control signaling or downlink data.

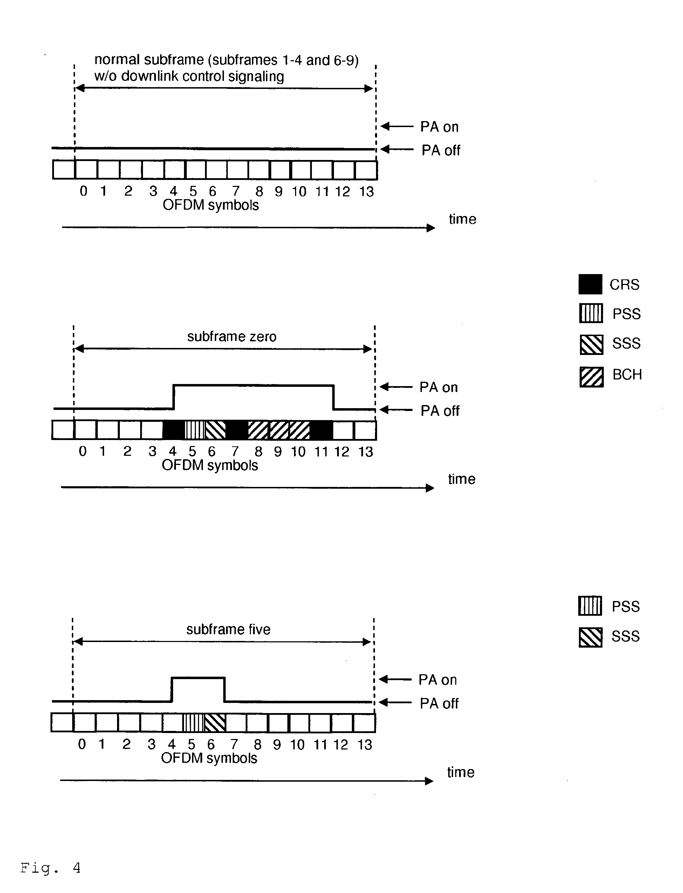

An example for said further mode for transmission is depicted in fig. 4.

The 14 OFDM symbols that build a normal unicast subframe, as e.g. the subframes 1-4 and 6-9 in LTE, are depicted in the upper part of fig. 4.

According to said further mode for transmission, the cell-specific reference signals CRS are only transmitted in subframes which are really used to transmit downlink control signaling or downlink data.

In an example of a normal unicast subframe as depicted in the upper part of fig. 4, no OFDM symbols are used for transmission of cell-specific reference signals CRS, as no downlink control signaling or downlink data is transmitted.

This structure will result in a power profile according to the upper solid line. Thus, the transmission structure results in a minimum power-amplifier transmission-time fraction of (0 OFDM symbols)/(14 OFDM symbols) = 0% compared to 43% in the transmission mode depicted in fig. 3.

The 14 OFDM symbols that build subframe zero in LTE are depicted in the middle part of fig. 4.

According to said further mode for transmission, in subframe zero, cell-specific reference signals CRS are transmitted, as downlink control signaling is transmitted in the form of broadcast channel information BCH.

According to a preferred embodiment of said further mode for transmission depicted in fig. 4, in subframe zero, the OFDM symbols 4, 7 and 11 are used for transmission of cell-specific reference signals CRS. Thus, compared to the mode for transmission depicted in fig. 3 in which 4 OFDM symbols are used for transmission of cell-specific reference signals CRS, only a reduced number of 3 OFDM symbols are used for transmission of cell-specific reference signals CRS.

The primary synchronization signals PSS and the secondary synchronization signals SSS, and the broadcast channel information BCH are transmitted in subframe 0 in the OFDM symbols 5, 6 and 8-10 respectively.

The transmission structure for subframe zero will result in one transmission being 7.5 OFDM symbols long, which can be seen by the solid line representing the power profile. Thus, the transmission structure results in a minimum power-amplifier transmission-time fraction of (7.5 OFDM symbols)/(14 OFDM symbols) ≈ 54% compared to 71% in the transmission mode depicted in fig. 3.

The 14 OFDM symbols that build subframe five in LTE are depicted in the lower part of fig. 4.

According to said further mode for transmission, in the example for subframe five as depicted in fig. 4, no OFDM symbols are used for transmission of cell-specific reference signals CRS, as only primary synchronization signals PSS and secondary synchronization signals SSS are transmitted, but no downlink control signaling or downlink data is transmitted.

The primary synchronization signals PSS and the secondary synchronization signals SSS are transmitted in the OFDM symbols 5 and 6 respectively.

The transmission structure for subframe five will result in one transmission being 2.5 OFDM symbols long, which can be seen by the solid line representing the power profile. Thus, the transmission structure results in a minimum power-amplifier transmission-time fraction of (2.5 OFDM symbols)/(14 OFDM symbols) ≈ 18% compared to 54% in the transmission mode depicted in fig. 3.

The overall minimum power-amplifier transmission-time fraction of the mode for transmission between a base station BS and user terminals UE, in which cell-specific reference signals are only transmitted in subframes which are used to transmit downlink control signaling or downlink data, is in average significantly below the overall minimum power-amplifier transmission-time fraction of the mode for transmission between a base station BS and user terminals UE, in which cell-specific reference signals are transmitted in all subframes predefined for transmission of downlink control signaling or downlink data.

Thus, by switching between the two modes for transmission, the energy consumption of a communication network can be significantly reduced.

According to another aspect of the invention, depending on the current mode for transmission, a dedicated mode for determination of at least one of the group of channel quality information, precoding matrix information, and rank information is chosen.

If a first mode for transmission between a base station BS and user terminals UE is used, in which cell-specific reference signals are only transmitted in subframes which are used to transmit downlink control signaling or downlink data, there is only the guarantee that cell-specific reference signals are transmitted in subframe zero. Thus, if the first mode for transmission is used, the user terminals UE use a first mode for determination of at least one of the group of channel quality information, precoding matrix information, and rank information which is based on the cell-specific reference signals transmitted in the first subframe within the frames.

If a second mode for transmission between a base station BS and user terminals UE is used, in which cell-specific reference signals are transmitted in all subframes predefined for transmission of downlink control signaling or downlink data, the user terminals UE use a second mode for determination of at least one of the group of channel quality information, precoding matrix information, and rank information which is based on the cell-specific reference signals transmitted in all subframes predefined for transmission of downlink control signaling or downlink data.

Apparently, as in the first mode a user terminal receives less cell specific reference signals as compared to the second mode, the accuracy of the computed channel quality information, precoding matrix information, and rank information is negatively impacted.

In LTE, channel quality information, precoding matrix information, or rank information, are comprised in the so-called channel quality indicator, precoding matrix indicator, and rank indicator respectively.

The channel quality indicator represents the recommended modulation scheme and coding rate that should, preferably, be used for the downlink transmission.

The precoding matrix indicator provides a precoder matrix that should, preferably, be used for downlink transmission.

The rank indicator provides information about the channel rank, i.e. the number of layers that should, preferably, be used for downlink transmission to a user terminal.

In LTE release 8, cell-specific reference signals are transmitted in each subframe over the full system bandwidth. In LTE releases beyond release 8, some "blank" subframes may be predefined, e.g. on a semi-static basis by higher layer signaling to the user terminals, so as not to be used for transmission of downlink cell specific reference signals, downlink control signaling or downlink data.

In the following, an explanation is given on how the reduced transmission of cell-specific reference signals as proposed in the first mode for transmission described above can be compensated or why it can be accepted.

The cell-specific reference signals are used for following purposes:
- Handover measurements: it is assumed, that handover measurements can also be performed based on primary synchronization signals PSS and secondary synchronization signals SSS if the first mode for transmission described above is used. Furthermore, in subframe zero cell-specific reference signals are available for handover measurements.
- Demodulation: The detector of a user terminal performs channel estimation to enable demodulation based on cell-specific reference signals. As an alternative solution in case the first mode for transmission described above is used, LTE release 8 includes user-specific, also known as dedicated, pilot signals that can be used for demodulation of a physical downlink shared channel (PDSCH), where user-specific pilot signals are transmitted only in physical resource blocks allocated with a physical downlink shared channel. However, user-specific pilots cause additional overhead, and cell-specific reference signals appear indispensible for the demodulation of downlink control signaling, broadcast channel information and system information.
- Reporting of channel quality indicator (CQI), precoding matrix indicator (PMI) and rank indicator (RI): a user terminal performs measurements based on cell-specific reference signals to provide CQI/PMI/RI feedback to the base station. This is done to optimize the efficiency of the downlink data transmission by efficient link adaptation and frequency-selective packet scheduling, and selection of a suitable MIMO mode and precoding weights (MIMO = multiple-input multiple-output).
   ■ CQI reporting: Link adaptation can in principle be performed without CQI by using the ACK/NACK information, e.g. by slowly increasing the scheduled transport block size until the rate of NACKs reaches a target. Frequency-selective scheduling is mainly advantageous in the presence of a large number of users in the cell or in the presence of a small number of high traffic users. Apparently in the low load scenarios of interest, CQI reporting rate or accuracy could be reduced at the expense of some performance degradation, and this performance degradation can be compensated by sacrificing a bit more radio resources, e.g. by using a more reliable modulation and coding scheme by allocating more physical resource blocks for the same transport block size, but without increasing the power amplifier activity rate.
   ■ PMI/RI reporting: Knowledge of the MIMO rank at base station site is important, as rank 2 delivers a data rate which is about twice as high as compared to rank 1 transmission, but it is expected that the MIMO rank changes rather slowly, say on 50-100ms time basis. Knowledge of the optimum PMI on the other hand has limited performance impact, and there is the possibility to fall back on a static PMI.

From the above, it appears sufficient in low load scenarios to reduce the accuracy of CQI/PMI/RI feedback and use only a subset of LTE release 8 cell-specific reference signals for computation of CQI/PMI/RI. Further also primary synchronization signals PSS and secondary synchronization signals SSS are transmitted in each radio frame and can be used by a user terminal to compute CQI/PMI/RI.

In an embodiment of the invention, the first mode for determination of at least one of the group of channel quality information, precoding matrix information, and rank information is additionally based on the cell-specific reference signals transmitted in subframes which are used to transmit downlink control signaling or downlink data. Thus, measured radio parameters like e.g. CQI, PMI, or RI calculated based on the cell-specific reference signals are more accurate.

In a further embodiment of the invention, the reporting rate of CQI/PMI/RI could be adapted when switching between the first and second mode, e.g. by configuring two different CQI/PMI/RI reporting configurations in the user terminal during radio link setup, where in the first mode the CQI/PMI/RI reporting rate is reduced compared to the CQI/PMI/RI reporting rate in the second mode.

The switching to said first mode for transmission in which the sending of cell-specific reference signals is dynamically suspended, is particularly useful for reduction of energy consumption in low-load scenarios, as in low-load scenarios, there is a higher probability of subframes without downlink control signaling or downlink data.

Thus, according to a preferred embodiment of the invention, the first mode for transmission between a base station BS and user terminals UE, in which cell-specific reference signals are only transmitted in subframes which are used to transmit downlink control signaling or downlink data, is scheduled if the estimated usage of radio resources is below a predefined value, and the second mode for transmission between a base station BS and user terminals UE, in which cell-specific reference signals are transmitted in all subframes predefined for transmission of downlink control signaling or downlink data, is scheduled if the estimated usage of radio resources is above a predefined value.

The usage of radio resources can be estimated based on the amount of allocated downlink radio resources, based on the number of active user terminals UE served by the base station BS, or based on an aggregated data rate in downlink of the user terminals UE served by the base station BS.

According to a preferred embodiment of the invention, the use of said first mode for transmission or said second mode for transmission between a base station BS and user terminals UE is signaled by the base station BS to the user terminals UE preferably via a broadcast channel (BCH).

This signaling of the transmission mode to the user terminals has the advantage that the user terminals may reduce their energy consumption by switching off algorithms dedicated for the detection of the transmission mode.

As an alternative, the user terminals UE detect in which subframes cell-specific reference signals are transmitted based on a power offset of cell-specific reference signals to primary synchronization signals or secondary synchronization signals, and deduce based on the subframes in which cell-specific reference signals are transmitted whether the first mode for transmission or the second mode for transmission is used. In other words, the user terminals UE detect the power of received signals, and can determine whether cell-specific reference signals are among the received signals, as the user terminals UE detect the power of primary synchronization signals or secondary synchronization signals and know the power offset of cell-specific reference signals to primary synchronization signals or secondary synchronization signals.

Preferably, the base station BS signals to the user terminals UE the power offset of cell-specific reference signals to primary synchronization signals or secondary synchronization signals. However, the power offset of cell-specific reference signals to primary synchronization signals or secondary synchronization signals can also be known in the user terminals UE in advance.

In an embodiment of the invention, in order to reduce the amount of transmitted cell-specific reference signals, the cell-specific reference signals are transmitted only in either-the first OFDM symbol of subframes, or the first and the fifth OFDM symbols of subframes.

## Claims

1. A method for transmission between a base station (BS) and user terminals (UE), wherein
• in a first mode for transmission between a base station (BS) and user terminals (UE), cell-specific reference signals are only transmitted in subframes which are used to transmit downlink control signaling or downlink data,
• in a second mode for transmission between a base station (BS) and user terminals (UE), cell-specific reference signals are transmitted in all subframes predefined for transmission of downlink control signaling or downlink data,
• if the first mode for transmission is used, the user terminals (UE) use a first mode for determination of at least one of the group of channel quality information, precoding matrix information, and rank information which is based on the cell-specific reference signals transmitted in the first subframe within the frames,
• if the second mode for transmission is used, the user terminals (UE) use a second mode for determination of at least one of the group of channel quality information, precoding matrix information, and rank information which is based on the cell-specific reference signals transmitted in all subframes predefined for transmission of downlink control signaling or downlink data,
and **characterised in that**
• the user terminals (UE) detect in which subframes cell-specific reference signals are transmitted based on a power offset of cell-specific reference signals to primary synchronization signals or secondary synchronization signals,
• and the user terminals (UE) deduce based on the subframes in which cell-specific reference signals are transmitted whether the first mode for transmission or the second mode for transmission is used.

2. A method according to claim 1, wherein the first mode for determination of at least one of the group of channel quality information, precoding matrix information, and rank information is additionally based on primary synchronization signals or secondary synchronization signals.

3. A method according to any of the preceding claims, wherein the first mode for determination of at least one of the group of channel quality information, precoding matrix information, and rank information is additionally based on the cell-specific reference signals transmitted in subframes which are used to transmit downlink control signaling or downlink data.

4. A method according to any of the preceding claims, wherein
• the first mode for transmission between a base station (BS) and user terminals (UE), in which cell-specific reference signals are only transmitted in subframes which are used to transmit downlink control signaling or downlink data, is scheduled if the estimated usage of radio resources is below a predefined value,
• and the second mode for transmission between a base station (BS) and user terminals (UE), in which cell-specific reference signals are transmitted in all subframes predefined for transmission of downlink control signaling or downlink data, is scheduled if the estimated usage of radio resources is above a predefined value.

5. A method according to claim 4, wherein the usage of radio resources is estimated based on the amount of allocated downlink radio resources.

6. A method according to claim 4, wherein the usage of radio resources is estimated based on the number of active user terminals (UE) served by the base station (BS).

7. A method according to claim 4, wherein the usage of radio resources is estimated based on an aggregated data rate in downlink.

8. A method according to any of the preceding claims, wherein the use of said first mode for transmission or said second mode for transmission between a base station (BS) and user terminals (UE) is signaled by the base station (BS) to the user terminals (UE).

9. A method according to claim 8, wherein the use of said first mode for transmission or said second mode for transmission between a base station (BS) and user terminals (UE) is signaled by the base station (BS) to the user terminals (UE) via a broadcast channel.

10. A method according to any of the preceeding claims,
wherein the base station (BS) signals to the user terminals (UE) the power offset of cell-specific reference signals to primary synchronization signals or secondary synchronization signals.

11. A method according to any of the preceding claims,
wherein the cell-specific reference signals are transmitted only in one of the group of the first OFDM symbol of subframes, and the first and the fifth OFDM symbols of subframes.

12. A user terminal (UE) for transmission between a base station (BS) and the user terminal (UE), wherein the user terminal (UE) comprises at least one processing means which is adapted to
• use a first mode for determination of at least one of the group of channel quality information, precoding matrix information, and rank information which is based on cell-specific reference signals transmitted in the first subframe within the frames, if a first mode for transmission is used in which cell-specific reference signals are only transmitted in subframes which are used to transmit downlink control signaling or downlink data,
• use a second mode for determination of at least one of the group of channel quality information, precoding matrix information, and rank information which is based on the cell-specific reference signals transmitted in all subframes predefined for transmission of downlink control signaling or downlink data, if the second mode for transmission is used in which cell-specific reference signals are transmitted in all subframes predefined for transmission of downlink control signaling or downlink data,
and **characterised in that** the processing means is furthermore adapted to
• detect in which subframes cell-specific reference signals are transmitted based on a power offset of cell-specific reference signals to primary synchronization signals or secondary synchronization signals,
• and deduce based on the subframes in which cell-specific reference signals are transmitted whether the first mode for transmission or the second mode for transmission is used.

## Patentansprüche

1. Verfahren zur Übertragung zwischen einer Basisstation (BS) und Benutzerendgeräten (UE), wobei
• in einem ersten Modus zur Übertragung zwischen einer Basisstation (BS) und Benutzerendgeräten (UE) zellspezifische Referenzsignale nur in denjenigen Teilrahmen übertragen werden, die für die Übertragung einer Downlink-Steuerungssignalisierung oder von Downlink-Daten benutzt werden,
• in einem zweiten Modus zur Übertragung zwischen einer Basisstation (BS) und Benutzerendgeräten (UE) zellspezifische Referenzsignale in allen für die Übertragung einer Downlink-Steuerungssignalisierung oder von Downlink-Daten vordefinierten Teilrahmen übertragen werden,
• wenn der erste Modus für die Übertragung verwendet wird, verwenden die Benutzerendgeräte (UE) einen ersten Modus zur Bestimmung mindestens einer Information aus der Gruppe bestehend aus Kanalqualitätsinformationen, Vorcodierungsmatrix-Informationen und Ranginformationen auf der Basis der im ersten Teilrahmen innerhalb der Rahmen übertragenen zellspezifischen Referenzsignale,
• wenn der zweite Modus für die Übertragung verwendet wird, verwenden die Benutzerendgeräte (UE,) einen zweiten Modus zur Bestimmung mindestens einer Information aus der Gruppe bestehend aus Kanalqualitätsinformationen, Vorcodierungsmatrix-Informationen und Ranginformationen auf der Basis der in allen für die Übertragung einer Downlink-Steuerungssignalisierung oder von Downlink-Daten vordefinierten Teilrahmen vordefinierten Teilrahmen,
und **dadurch gekennzeichnet, dass**
• die Benutzerendgeräte (UE) auf der Basis eines Leistungs-Offsets von zellspezifischen Referenzsignalen im Verhältnis zu primären Synchronisationssignalen oder sekundären Synchronisationssignalen erkennen, in welchen Teilrahmen zellspezifische Refererizsignale übertrafen werden,
• und die Benutzerendgeräte (UE) auf der Basis der Teilrahmen, in welchen zellspezifische Referenzsignale übertragen werden, folgern, ob der erste Übertragungsmodus oder der zweite Übertragungsmodus verwendet wird.

2. Verfahren nach Anspruch 1, wobei der erste Modus zur Bestimmung mindestens einer Information aus der Gruppe bestehend aus Kanalqualitätsinformationen, Vorcodierungsmatrix-Informationen und Ranginformationen zusätzlich auf primären Synchronisationssignalen oder sekundären Synchronisationssignalen basiert.

3. Verfahren nach einem beliebigen der vorstehenden Ansprüche, wobei der erste Modus zur Bestimmung mindestens einer Information aus der Gruppe bestehend aus Kanalqualitätsinformationen, Vorcodierungsmatrix-Informationen und Ranginformationen zusätzlich auf den in Teilrahmen, die für die Übertragung einer Downlink-Steuerungssignalisierung oder von Downlink-Daten benutzt werden, übertragenen zellspezifischen Referenzsignalen basiert.

4. Verfahren nach einem beliebigen der vorstehenden Ansprüche, wobei
• der erste Modus zur Übertragung zwischen einer Basisstation (BS) und Benutzerendgeräten (UE), in welchem zellspezifische Referenzsignals nur in denjenigen Teilrahmen übertragen werden, die für die Übertragung einer Downlink-Steuerungssignalisierung oder von Downlink-Daten benutzt werden, eingesetzt wird, wenn die geschätzte Nutzung von Funkressourcen unter einem vordefinierten Wert liegt,
• und der zweite Modus zur Übertragung zwischen einer Basisstation (BS) und Benutzerendgeräten (UE), in welchem zellspezifische Referenzsignale in allen für die Übertragung einer Downlink-Steuerungssignalisierung oder von Downlink-Daten vordefinierter Teilrahmen übertragen werden, eingesetzt wird, wenn die geschätzte Nutzung von Funkressourcen über einem vordefinierten Wert liegt.

5. Verfahren nach Anspruch 4, wobei die Nutzung von Funkressourcen auf der Basis der Menge der zugewiesenen Downlink-Funkressourcen geschätzt wird.

6. Verfahren nach Anspruch 4, wobei die Nutzung von Funkressourcen auf der Basis der Anzahl der von der Basisstation (BS) bedienten aktiven Benutzerendgeräte (UE) geschätzt wird.

7. Verfahren nach Anspruch 4, wobei die Nutzung von Funkressourcen auf der Basis einer aggregierten Datenrate geschätzt wird.

8. Verfahren nach einem beliebigen der vorstehenden Anspruche, wobei die Verwendung des besagten ersten Modus oder des besagten zweiten Modus für die Übertragung zwischen einer Basisstation (BS) und Benutzerendgeräten (UE) von der Basisstation (BS) an die Benutzerendgeräte (UE) signalisiert wird.

9. Verfahren nach Anspruch 8, wobei die Verwendung des besagten ersten Modus oder des besagten zweiten Modus für die Übertragung zwischen einer Basisstation (BS) und Benutzerendgeräten (UE) über einen Broadcast-Kanal von der Basisstation (BS) an die Benutzerendgeräte (UE) signalisiert wird

10. Verfahren nach einem beliebigen der vorstehenden Ansprüche, wobei die Basisstation (BS) den Leistungs-Offset von zellspezifischen Referenzsignalen im Verhältnis zu primären Synchronisationssignalen oder sekundären Synchronisationssignalen an die Benutzerendgeräte (UE) signalisiert.

11. Verfahren nach einem beliebigen der vorstehenden Ansprüche, wobei die zellspezifischen Referenzsignale nur in einer der Gruppe bestehend aus dem ersten OF DM-Symbol von Teilrahmen und dem ersten und dem fünften OFDM-Symbol von Teilrahmen übertragen werden.

12. Benutzerendgerät (UE) zur Übertragung zwischen einer Basisstation (BS) und dem Benutzerendgerät (UE), wobei das Benutzerendgerät (UE) mindestens ein Verarbeitungsmittel umfasst, welches für die Durchführung der folgenden Schritte ausgelegt ist:
• Verwenden eines ersten Modus zur Bestimmung mindestens einer Information aus der Gruppe bestehend aus Kanalqualitätsinformationen, Vorcodierungsmatrix-Informationen und Ranginformationen auf der Basis der im ersten Teilrahmen innerhalb der Rahmen übertragenen zellspezifischen Referenzsignale, wenn ein erster Modus für die Übertragung verwendet wird, in welchem zellspezifische Referenzsignale nur in denjenigen Teilrahmen übertragen werden, die für die Übertragung einer Downlink-Steuerungssignalisierung oder von Downlink-Daten benutzt werden,
• Verwenden eines zweiten Modus zur Bestimmung mindestens einer Information aus der Gruppe bestehend aus Kanalqualitätsinformationen, Vorcodierungsmatrix-Informationen und Ranginformationen auf der Basis der in allen für die Übertragung einer Downlink-Steuerungssignatisierung oder von Downlink-Daten vordefinierten Teilrahmen übertragenen zellspezifischen Referenzsignale, wenn der zweite Modus für die Übertragung verwendet wird, in welchem zellspezifische Referenzsignale in allen für die Übertragung einer Downlink-Steuerungssignalisierung oder von Downlink-Daten vordefinierten Teilrahmen übertragen werden,
und **dadurch gekennzeichnet, dass** das Verarbeitungsmittel weiterhin für die Durchführung der folgenden Schritte ausgelegt ist:
• Erkennen, auf der Basis eines Leistungs-Offsets von zellspezifischen Referenzsignalen im Verhältnis zu primären Synchronisationssignalen oder sekundären Synchronisationssignalen, in welchen Teilrahmen zellspezifische Referenzsignale übertragen werden,
• und Folgern, auf der Basis der Teilrahmen, in welchen zellspezifische Referenzsignale übertragen werden, ob der erste Übertragungsmodus oder der zweite Übertragungsmodus verwendet wird.

## Revendications

1. Procédé de transmission entre une station de base (BS) et des terminaux d'utilisateur (UE), dans lequel
• dans un premier mode de transmission entre une station de base (BS) et des terminaux d'utilisateur (UE), des signaux de référence spécifiques à la cellule sont transmis seulement dans des sous-trames qui sont utilisées pour transmettre une signalisation de commande de liaison descendante ou des données de liaison descendante,
• dans un deuxième mode de transmission entre une station de base (BS) et des terminaux d'utilisateur (UE), des signaux de référence spécifiques à la cellule sont transmis dans toutes les sous-trames prédéfinies pour la transmission de signalisation de commande de liaison descendante ou de données de liaison descendante,
• si le premier mode de transmission est utilisé, les terminaux d'utilisateur (UE) utilisent un premier mode de determination d'au moins des informatisons de qualité de canal, des informations de matrice de précodage ou des informations de rang qui est basé sur les signaux de référence spécifiques à la cellule transmis dans la première sous-trame à l'intérieur des trames,
• si le deuxième mode de transmission est utilisé, les terminaux d'utilisateur (UE) utilisent un deuxième mode de determination d'au moins des informations de qualité de canal, des informations de matrice de précodage ou des informations de rang qui est basé sur les signaux de référence spécifiques à la cellule transmis dans toutes les sous-trames prédéfinies pour la transmission de signalisation de commande de liaison descendante ou de données de liaison descendante,
et **caractérise en ce que**
• les terminaux d'utilisateur (UE) détectent dans quelles sous-trames des signaux de référence spécifiques à la cellule sont transmis sur la base d'un décalage de puissance des signaux de référence spécifiques à la cellule par rapport aux signaux de synchronisation primaires ou aux signaux de synchronisation secondaire,
• et les terminaux d'utilisateur (UE) déguisent, sur la base des sous-trames dans lesquelles les signaux de référence spécifiques à la cellule sont transmis, si la premier mode de transmission ou le deuxième mode de transmission est utilisé.

2. Procédé selon la revendication 1, dans lequel le premier mode de determination d'au moins des informations de qualité de canal, des informations de matrice de précodage ou des informatisons de rang est en outre basé sur des signaux de synchronisation primaires ou des signaux de synchronisation secondaires.

3. Procédé selon l'une quelconque des revendications précédentes, dans lequel le premier mode de determination d'au moins des informations de qualité de canal, des informations de matrice de précodage ou des informations de rang est en outre basé sur les signaux de référence spécifiques à la cellule transmis dans des sous-trames qui sont utilisées pour transmettre une signalisation de commande de liaison descendante ou des données de liaison descendante.

4. Procédé selon l'une quelconque des revendications précédentes, dans lequel
• le premier mode de transmission entre une station de base (BS) et des terminaux d'utilisateur (UE), dans lequel des signaux de référence spécifiques à la cellule sont transmis seulement dans des sous-trames qui sont utilisées pour transmettre une signalisation de commande de liaison descendante ou des données de liaison descendante, est planifié si l'utilisation estimée de ressources radio est inférieure à une valeur prédéfinie,
• et le deuxième mode de transmission entre une station de base (BS) et des terminaux d'utilisateur (UE), dans lequel des signaux de référence spécifiques à la cellule sont transmis dans toutes les sous-trames prédéfinies pour transmettre une signalisation de commande de liaison descendante ou des données de liaison descendante, est planifié si l'utilisation estimée de ressources radio est supérieure à une valeur prédéfinie,

5. Procédé selon la revendication 4, dans lequel l'utilisation de ressources radio est estimée sur la base de la quantité de ressources radio de liaison descendante allouées.

6. Procédé selon la revendication 4, dans lequel l'utilisation de ressources radio est estimée sur la base du nombre de terminaux d'utilisateur (UE) actifs desservis par la station de base (BS).

7. Procédé selon la revendication 4, dans lequel l'utilisation de ressources radio est estimée sur la base d'un débit de données agrégé en liaison descendante.

8. Procédé selon l'une quelconque des revendications précédentes, dans lequel l'utilisation dudit premier mode de transmission ou dudit deuxième mode de transmission entre une station de base (BS) et des terminaux d'utilisateur (UE) est signalée par la station de base (BS) aux terminaux d'utilisateur (UE).

9. Procédé selon la revendication 8, dans lequel l'utilisation dudit premier mode de transmission ou dudit deuxième mode de transmission entre une station de base (BS) et des terminaux d'utilisateur (UE) est signalée par la station de base (BS) aux terminaux d'utilisateur (UE) par l'intermédiaire d'un canal de diffusion.

10. Procédé selon l'une quelconque des revendications précédentes, dans lequel la station de base (BS) signale aux terminaux d'utilisateur (UE) le décalage de puissance des signaux de référence spécifiques à la cellule par rapport aux signaux de synchronisation primaires ou aux signaux de synchronisation secondaires.

11. Procédé selon l'une quelconque des revendications précédentes, dans lequel les signaux de référence spécifiques à la cellule sont transmis seulement dans le premier symbole OFDM des sous-trames ou dans le premier et le cinquième symboles OFDM des sous-trames.

12. Terminal d'utilisateur (UE) pour la transmission entre une station de base (BS) et le terminal d'utilisateur (UE), dans lequel le terminal d'utilisateur (UE) comprend au moins un moyen de traitement qui est adapté pour
• utiliser un premier mode de détermination d'au moins des information de qualité de canal, des informations de matrice de précodage ou des informations de rang qui est basé sur des signaux de référence spécifiques à la cellule transmis dans la première sous-trame à l'intérieur des trames, si l'on utilise un premier mode de transmission dans lequel des signaux de référence spécifiques à la cellule sont transmis seulement dans des sous-trames qui sont utilisées pour transmettre une signalisation de commande de liaison descendante ou des données de liaison descendante,
• utiliser un deuxième mode de determination d'au moins des informations de qualité de canal, des informations de matrice de précodage ou des informatisons de rang qui est basé sur les signaux de référence spécifiques à la cellule transmis dans toutes les sous-trames prédéfinies pour la transmission de signalisation de commande de liaison descendante ou de données de liaison descendante, si l'on utilise le deuxième mode de transmission dans lequel des signaux de référence spécifiques à la cellule sont transmis dans toutes les sous-trames prédéfinies pour la transmission de signalisation de commande de liaison descendante ou de données de liaison descendante, et **caractérisé en ce que** le moyen de traitement est en outre adapté pour
• détecter dans quelles sous-trames des signaux de référence spécifiques à la cellule sont transmis sur la base d'un décalage de puissance des signaux de référence spécifiques à la cellule par rapport aux signaux de synchronisation primaires ou aux signaux de synchronisation secondaires,
• et déduire, sur la base des sous-trames dans desquelles des signaux de référence spécifiques à la cellule sont transmis, si le premier mode de transmission ou le deuxième mode de transmission est utilisé.
